# EUROPEAN PATENT SPECIFICATION

(11) **EP 3 676 019 B1**
(45) Date of publication and mention of the grant of the patent: **08.04.2026**
(21) Application number: 18765989.1
(22) Date of filing: 29.08.2018
(51) Int. Cl.: B05B 13/00, B05B 12/12, B05B 13/04, B60B 35/00, B60G 7/00, B05B 12/00, B60B 35/14, E04F 21/08

(54) **ROBOTIC VEHICLE FOR SPRAYING**
ROBOTERFAHRZEUG ZUM SPRÜHEN
VÉHICULE ROBOTISÉ POUR PULVÉRISER

(30) Priority: 29.08.2017 GB 201713787; 17.04.2018 GB 201806252
(43) Date of publication of application: 08.07.2020
(73) Proprietor: Q-Bot Limited, Wandsworth, Greater London SW18 4UQ (GB)
(72) Inventor: HAMBLIN, Chris, London SE8 3PW (GB); TAYLOR, Daniel, Croydon CR0 6JE (GB); UGLOW, Chris, Wandsworth, London SW18 4UQ (GB); SPYRAKOS, Emmanuel, High Wycombe, Buckinghamshire HP13 5ST (GB); HOLLOWAY, Mathew, Wandsworth, London SW18 4UQ (GB)
(74) Representative: HGF
(86) International application number: PCT/GB2018/052435
(87) International publication number: WO 2019/043377

(56) References cited:
- WO-A1-2016/165925
- CN-A- 105 035 204
- CN-U- 204 749 736
- GB-A- 2 539 661
- KR-B1- 100 861 325
- US-A- 6 112 843
- US-A1- 2011 168 460

## Description

This invention relates to a robotic vehicle for operating in confined spaces, in particular spaces accessed through a restricted opening, such as under a floor of a building, for example a house. The robotic vehicle may carry out operations including spraying, projecting or adding by any other additive manufacturing process material onto a surface and/or shaping material to a desired profile, for example under the floor of a building or on the wall of a house.

### BACKGROUND

Numerous solutions exist for carrying out operations in close proximity to surfaces, such as in confined spaces. Some operations, for example, in confined spaces have been carried out by hand. Other operations in confined spaces have been carried out with the aid of remotely operated devices.

Similarly, numerous solutions exist for spraying a material onto a surface. Some solutions for spraying a material onto a surface use a robotic device to carry a spray nozzle to spray the material on the surface. When performing an operation in close proximity to a surface material associated with the operation may fall onto the device and obscure sensors and other equipment.

Further, solutions exist for carrying out operations by robotic vehicles.

US2011168460A1 discloses a mobile robot that includes a chassis, a pair of drive systems, and a manipulator arm with a turret. Wheels are removably mounted to the chassis via shafts.

WO2016165925A1 discloses a mobile medical device with at least one motor-driven wheel. The motor-driven wheel is arranged on a hub assigned to the motor-driven wheel, and the motor-driven wheel is removably attachable to the hub for removal of the motor-driven wheel for replacement, cleaning, or maintenance. US 6 112 843 A discloses another vehicle of the prior art.

The present disclosure seeks to provide at least another solution to carrying out operations in close proximity to a surface and/or in confined spaces and/or spraying a material onto a surface and/or carrying out operations by robotic vehicles.

### BRIEF SUMMARY OF THE DISCLOSURE

In accordance with an aspect of the present invention there is provided a robotic vehicle for operating in a confined space according to claim 1.

Thus, there is provided a robotic vehicle where each wheel is removable from the chassis of the robotic vehicle. This enables the robotic vehicle to be easily inserted into and removed from a confined space, such as the void under a floor of a building because the robotic vehicle can be removed in parts, each of which is smaller than the size of the assembled robotic vehicle. Further, the wheels are removably mounted at a side of the chassis, rather than the front or the rear of the chassis. This ensures that it is still easily possible to remove the wheels from the robotic vehicle even when sensors and/or tools and/or umbilical connections for materials or power are provided at the front and/or rear of the robotic vehicle.

In some examples not covered by the claims, the mounting point for the respective wheel need not be away from the front and the rear of the chassis, as this still enables the robotic vehicle to be easily inserted into and removed from a confined space in parts.

The mounting point for the respective wheel away from the front and the rear of the chassis may be at a side of the chassis.

The robotic vehicle may comprise a camera arranged to capture images of the surroundings of the robotic vehicle. The robotic vehicle may comprise a controller to control operation of the robotic vehicle. The robotic vehicle may comprise a control input to receive control instructions from a controller remote from the robotic vehicle. The controller remote from the robotic vehicle may be outside the confined space. The operator may be outside the confined space.

In some examples, the robotic vehicle may operate autonomously. In other examples, the robotic vehicle may be controlled manually by an operator.

The release mechanism may be operable one-handed by an operator to release the respective wheel from the chassis. It will be understood that the term one-handed means that the release mechanism can be operated by a single hand of the operator, though of course, either hand of the operator may be used as convenient. The release mechanism may be manually operable by the operator to release the respective wheel from the chassis. The release mechanism may be operable by actuation by the operator to release the respective wheel from the chassis.

The release mechanism may be operable tool-less by an operator to release the respective wheel from the chassis. It will be understood that the term "tool-less" means operable without the use of a tool, and therefore operable directly by one or both hands of the operator.

The release mechanism may be a quick-release mechanism. It will be understood that the term "quick-release" as used in this context means a mechanism which is easy for an operator to operate. In particular, the term "quick-release" does not necessarily require that the mechanism can be operated quickly, though many quick-release mechanisms are.

The release mechanism may be a ball detent mechanism. The release mechanism may comprise a captive nut sometimes referred to as a cage nut.

The release mechanism may further comprise an electrical connection portion for providing an electrical connection from the robotic vehicle to the wheels.

The robotic vehicle may further comprise the wheels. Each wheel may comprise a corresponding second part of the release mechanism to be released from the first part of the release mechanism on operation of the release mechanism.

In embodiments, all wheels of the robotic vehicle may be connected to the chassis via respective release mechanisms.

The release mechanism may be operable by actuation to secure the wheels to the chassis. In some embodiments, the release mechanism is operable by push-fit connection to secure the wheels to the chassis.

The second part of the release mechanism may be configured to be actuated upon one-handed operation by the operator to selectively release the wheel from the chassis. In alternative examples, the first part of the release mechanism may be configured to be actuated upon one-handed operation by the operator to selectively release the wheel from the chassis.

The wheels may be driven wheels to drive the vehicle in the longitudinal direction.

An axis of rotation of the wheels may be offset from an axis of movement of the release mechanism during removal of the wheels from the chassis. Thus, access to the release mechanism is easy because the wheels are axially spaced from the release mechanism.

The release mechanism is selectively operable to provide one of a plurality of angular positions of the offset between the axis of rotation of the wheels and the axis of movement of the release mechanism. Thus, the wheels can be mounted to the chassis at a plurality of different angular offsets between the axis of rotation of the wheels and the first part of the release mechanism. This allows the robotic vehicle to be reconfigured to one of a plurality of different ride heights of the chassis from a ground surface to be engaged by the wheels, allowing the same robotic vehicle to be used in a variety of different environments.

The plurality of angular positions may include substantially 60 degrees relative to the longitudinal direction. The plurality of angular positions may span at least 90 degrees. The plurality of angular positions of the offset of the axis of rotation of the wheels from the axis of movement of the release mechanism may include the longitudinal direction. The plurality of angular positions of the offset of the axis of rotation of the wheels from the axis of movement of the release mechanism may include a direction such that the axis of rotation of the wheels is below the axis of movement of the release mechanism. In examples, it will be understood that the plurality of angular positions may include an angle outward from the axis of movement of the release mechanism, such that a wheel base of the robotic vehicle is widened. A wide wheel base facilitates good stability of the robotic vehicle. In examples, the plurality of angular positions may alternatively or additionally include an angle inward from the axis of movement of the release mechanism, such that a wheel base of the robotic vehicle is narrowed. A narrow wheel base allows good manoeuvrability of the robotic vehicle. The plurality of angular positions may include one or more angular positions such that the axis of rotation of the wheels is above the axis of movement of the release mechanism, for example when the radius of one or more of the wheels is greater than a distance from the axis of movement of the release mechanism and a lower surface of the chassis. Thus, the ride height of the robotic vehicle can be low to the ground, even when large radius wheels are used. In examples, a substantially similar ride height can be maintained even when different sets of wheels are used, each set having a different wheel size.

Viewed from another aspect, the present invention provides a method of removing a robotic vehicle from a confined space according to claim 14.

Various other examples of a robotic vehicle and associated aspects are described hereinafter.

In some examples, there is provided a sensor apparatus for protecting a sensor device in an environment where material has been sprayed. The sensor apparatus comprises a housing having a directional sensor responsive to an environment of the sensor and a viewing window defining a viewing plane and a normal axis extending away from the viewing window. The sensor apparatus further comprises a shutter and at least one actuator configured to drive the shutter in a plane of motion. The plane of motion is substantially parallel to and spaced from the viewing plane in the direction of the normal axis. The shutter is configured to remove spray material adhered to the viewing window when driven in the plane of motion.

Thus, a mechanism is provided to protect the sensor even in environments in which spray material may be deposited on the sensor apparatus.

The shutter may be configured to cover the viewing window, in particular to completely cover the viewing window, in at least one position of use. The shutter may comprise a bevelled edge configured to remove adhered spray material from the viewing window. The shutter may be configured to be driven from a first position substantially covering the viewing window to a second position substantially clear of the viewing window. The housing may comprise a cutting edge spaced from the shutter in the direction of the normal axis. Relative motion between the shutter and the cutting edge may remove spray material adhered to the shutter.

In other examples, there is provided sensor apparatus for protecting a sensor device in an environment where material has been sprayed, comprising: a housing having a directional sensor responsive to an environment of the sensor and a viewing window defining a viewing plane and a normal axis extending away from the viewing window; a shutter; and at least one actuator configured to drive a shutter in a plane of motion, wherein the plane of motion is substantially parallel to and spaced from the viewing plane in the direction of the normal axis, wherein the shutter is configured to be driven from a first position substantially covering the viewing window to a second position substantially clear from the viewing window, wherein the housing comprises a cutting edge spaced from the shutter in the direction of the normal axis, and wherein relative motion between the shutter and the cutting edge removes spray material adhered to the shutter.

The housing may comprise a shroud having defined therein a viewing port. An edge of the shroud which defines the viewing port provides the cutting edge. The viewing port may be formed within a recess in the shroud. The recess may be formed of a plurality of angled surfaces, wherein each of the plurality of angled surfaces forms an obtuse angle with the viewing window.

The shutter may comprise a cleaning member arranged to clean the viewing window when the shutter is driven in the plane of motion. The shutter may comprise an anti-adhesive coating. The sensor may be at least one of a camera and a depth sensor.

The actuator may be driven by any of a compressed air source, a hydraulic system. The actuator may be in the form of an electrical actuator. Spraying apparatus comprising a spray gun arranged to spray a material on a surface may comprise sensor apparatus as described. The spray gun and actuator may be driven by the same compressed air source. The spray gun may be driven by the or a further electrical actuator.

In examples, there is provided a robotic vehicle for operating in a confined space, such as under a floor of a building, for example a house, the robotic vehicle comprising a chassis having a front and a rear defining a longitudinal direction extending between the front and the rear, the robotic vehicle configured for movement in the longitudinal direction; and sensor apparatus as described above.

In examples, there is provided a robotic vehicle for operating in a confined space, such as under a floor of a building, for example a house, the robotic vehicle comprising a chassis having a front and a rear defining a longitudinal direction extending between the front and the rear, the robotic vehicle configured for movement in the longitudinal direction; and spraying apparatus.

The robotic vehicle may comprise a controller configured to drive the shutter prior to movement of the robotic vehicle in the longitudinal direction.

In examples, there is provided sensor apparatus for protecting a sensor device in an environment where material has been sprayed, comprising: a housing having a directional sensor responsive to an environment of the sensor and a viewing window defining a viewing plane and a normal axis extending away from the viewing window; a transparent film located over the viewing window and fed from a first reel of transparent film to a second reel; and a motor configured to drive the second reel, whereby to replace a portion of transparent film located over the viewing window with clean transparent film from the first reel.

The robotic vehicle may be for operating over uneven ground. The chassis may comprise a front chassis portion to connect to one or more front wheels of the vehicle. The chassis may comprise a rear chassis portion connected to the front chassis portion at a connection point and to connect to one or more rear wheels of the vehicle. The rear chassis portion may be rotatable, at the connection point, relative to the front chassis portion about an axis substantially parallel to the longitudinal direction. The robotic vehicle may comprise a front-facing sensor provided forward of the connection point, for rotation with the rear chassis portion and substantially directed past the front of the robotic vehicle to detect directional sensor data from in front of the vehicle. The robotic vehicle may comprise a further sensor for rotation with the rear chassis portion and provided rearward of the connection point, the further sensor to detect further directional sensor data from the vehicle.

It will be understood that the term "directional sensor data" means data from a sensor which depends on a direction of a sensitive surface of the sensor. For example, a camera, directional microphone and rangefinder (for example a laser rangefinder) are all examples of sensors which detect directional sensor data.

In considering the advantages of these features, it is important to appreciate that the front chassis portion and the rear chassis portion together provide an elegant suspension arrangement for the robotic vehicle when moving over uneven ground. Both the front-facing sensor and the further sensor are arranged for rotation with the rear chassis portion. This is important because where the directional sensor data and the further directional sensor data from the front-facing sensor and the further sensor respectively are fused by a data-fusion algorithm to provide information about an operation or environment of the robotic vehicle to the operator, or to a further control system for the robotic vehicle, no registration processing is required to correct a frame of reference between the front-facing sensor and the further sensor, even though the chassis of the robotic vehicle is split into two mutually rotatable chassis portions.

Although, the example given has been described as a front-facing sensor, it will be appreciated, that other robotic vehicles may use a rear-facing sensor, provided rearward of the connection point, for rotation with the front chassis portion and substantially directed past the rear of the robotic vehicle to detect directional sensor data from the rear of the vehicle. In this case, the further sensor would also be for rotation with the front chassis portion and be provided frontward of the connection point.

Either or both of the front chassis portion and the rear chassis portion may comprise two or more wheels. The two or more wheels may be engaged within one or more tracks, whereby the vehicle is a tracked vehicle. The one or more tracks may be removable.

The robotic vehicle may further comprise a controller arranged to control operation of the robotic vehicle based on a combination of the directional sensor data from the front-facing sensor with the further directional sensor data from the further sensor.

The controller may combine the directional data from the front-facing sensor with the further directional sensor data from the further sensor using a common frame of reference between the front-facing sensor and the further sensor.

The robotic vehicle may comprise a sensor turret comprising one or more sensors responsive to an environment of the robotic vehicle. The sensor turret may be secured to the chassis and rotatable about an axis substantially transverse to the longitudinal direction and to an axis of rotation of the wheels. The sensor turret may be secured to the chassis by a turret release mechanism operable by an operator, whereby to be removable from the chassis prior to insertion (or removal) of the robotic vehicle to (or from) a confined space.

It will be appreciated that the further sensor may be one of the one or more sensors of the sensor turret.

Thus, the sensor turret is removable from the rest of the robotic vehicle. This enables the robotic vehicle to be easily inserted into and removed from a confined space, such as the void under a floor of a building because the robotic vehicle can be removed in parts, each of which is smaller than the size of the assembled robotic vehicle. Further, a first sensor turret can be easily swapped for a second sensor turret having different sensors and capabilities, thereby changing the functionality of the robotic vehicle quickly and conveniently. It will be understood that the turret release mechanism as described above can be used on robotic vehicles not adapted for use in confined spaces and the turret release mechanism can be operated by the operator to remove the sensor turret for replacement by a further, different, sensor turret.

The chassis may comprise a first part of the turret release mechanism and the sensor turret may comprise a second part of the turret release mechanism to be selectively released from the first part of the turret release mechanism on operation of the turret release mechanism.

The second part of the turret release mechanism may be configured to be actuated upon operation by the operator to release the turret from the chassis.

The turret release mechanism may be operable one-handed by an operator to release the sensor turret from the chassis. The turret release mechanism may be manually operable by the operator to release the sensor turret from the chassis. The turret release mechanism may be operable by actuation by the operator to release the sensor turret from the chassis.

The turret release mechanism may be operable tool-less by an operator to release the sensor turret from the chassis.

The turret release mechanism may be a quick-release mechanism. The turret release mechanism may be a ball detent mechanism. The ball detent mechanism may be coaxial with the axis of rotation of the sensor turret.

The turret release mechanism may further comprise an electrical connection portion for providing an electrical connection from the robotic vehicle to the sensor turret through the turret release mechanism.

The turret release mechanism may be operable by actuation to secure the sensor turret to the chassis. In some embodiments, the turret release mechanism is operable by push-fit connection to secure the sensor turret to the chassis.

The second part of the turret release mechanism may be configured to be actuated upon one-handed operation by the operator to selectively release the sensor turret from the chassis. In alternative examples, the first part of the turret release mechanism may be configured to be actuated upon one-handed operation by the operator to selectively release the sensor turret from the chassis.

The one or more sensors of the sensor turret may include a camera arranged to capture images of the confined space. The robotic vehicle may further comprise at least one directional light arranged to illuminate the confined space, wherein the robotic vehicle is configured such that the light is never directed in the same direction as the camera, whereby to substantially prevent glare from the light in the images captures from the camera.

Thus, the light never directly illuminates the region observed by the camera, substantially preventing or at least reducing glare in the images captured by the camera.

The light may be provided on the sensor turret. The light may be mounted for rotation with the camera. In examples, at least one directional light may be two directional lights, each directed in a different direction.

The sensor turret may further comprise a cover above the at least one light whereby to substantially prevent direct illumination of an upper surface of the confined space by the at least one light.

The robotic vehicle may comprise a spray gun mounted to the chassis and arranged to spray a material on a surface spaced from the robotic vehicle. The robotic vehicle may comprise a sensor mounted to the chassis, the sensor being a directional sensor responsive to an environment of the sensor and for outputting sensor data. The sensor may be mounted for motorised movement between a first position for capturing data indicative of a property of the spray gun, a second position for capturing data indicative of a property of the vehicle, and a third position where the sensor is protected by a cover portion of the robotic vehicle.

Thus, there is provided an advantageous robotic device where a sensor which is already required to be mounted for motorised movement between a first position and a second position, can be also moved to a third position to protect the sensor (which may be delicate and difficult or expensive to replace) as necessary depending on the activities and current or expected environment of the robotic vehicle (for example from the material sprayed by the spray gun).

The first position of the sensor may be for capturing data indicative of a coverage of the spray material on the surface. The second position may be for capturing further data indicative of a further property of the spray gun. In another example, the second position may be for capturing further data indicative of the environment ahead of the vehicle.

The spray gun may be coupled to a source of spray material. The source of spray material may be outside the confined space and connected to the spray gun by a supply hose. The spray material may be a thermal insulation material. The spray material may be an expanding foam material. The spray material may be polyurethane foam. The spray material may be mineral wool. The spray material may be a nano-insulation material. The spray material may be acoustic insulation. The spray material may be one or more of paint, a corrosion resistant coating, a treatment for fungal infestation such as fungicide, a treatment for parasitic infestation such as wood worm, an insecticide, a treatment for damp, a glue or adhesive, a building material such as a render or a plaster, a sealant, for example for leaks.

The motorised movement may be rotational movement.

The sensor may be comprised in a rotatable sensor drum. The sensor drum may be rotatable about an axis substantially parallel to the axis of rotation of the driven wheels.

The robotic vehicle may further comprise a controller configured to control the sensor drum to be in the third position during operation of the spray gun.

The sensor may be at least one of a camera and a depth sensor.

The spray gun may comprise a material input connector to connect to a supply hose supplying the material from the rear of the robotic vehicle. The robotic vehicle may further comprise a hose support member provided rearwards of the spray gun to support the supply hose away from the vehicle. The hose support member may be rotatable about an axis substantially transverse to the longitudinal direction and to the axis of rotation of the driven wheels, whereby to facilitate movement of the supply hose away from a rear of the robotic vehicle during rearward movement of the robotic vehicle.

Thus, there is provided a robotic vehicle with good manoeuvrability because it is able to back right up against a wall of the confined space because the supply hose is moved out of the way through the use of the rotatable hose support member.

The hose support member may secure the supply hose thereto, whereby to substantially prevent axial movement of the supply hose relative to the support member.

The chassis may further comprise an attachment point for attachment of a harness to the chassis, the harness for pulling the robotic vehicle out of the confined space to remove the robotic vehicle from the confined space. The harness may be arranged for tool-less attachment to the attachment point.

The tool-less attachment of the harness to the attachment point may be a magnetic attachment.

The robotic vehicle may be a driven vehicle. Each wheel comprises a propulsion unit. The propulsion unit is contained within the wheel.

The chassis of the robotic vehicle may have defined therein a finger groove for removal of the robotic vehicle from the confined space by hand.

The finger groove may be located at the rear of the robotic vehicle. The finger groove may be located at the front of the robotic vehicle.

The robotic vehicle may be for insertion and removal from an operating space through a restricted opening. The restricted opening may have an extent less than an extent of the assembled robotic vehicle. For example, the restricted opening may have an extent less than a width of the robotic vehicle, but greater than a width of the chassis of the robotic vehicle. Thus, the robotic vehicle can be inserted through the restricted opening after removal of the wheels.

The robotic vehicle may comprise a second part of the release mechanism to be released from the first part of the release mechanism provided on the chassis of the robotic vehicle on operation of the release mechanism.

The robotic vehicle may further comprise a sensor turret comprising one or more sensors responsive to an environment of the robotic vehicle, the sensor turret being secured to the chassis and rotatable about an axis substantially transverse to the longitudinal direction and to an axis of rotation of the wheels. The sensor turret may be secured to the chassis by a turret release mechanism operable by an operator, whereby to release the sensor turret from the chassis. The method may further comprise operating the turret release mechanism, whereby to remove the sensor turret from the chassis, and removing the sensor turret of the robotic vehicle from the confined space separately from the chassis of the robotic vehicle.

### BRIEF DESCRIPTION OF THE DRAWINGS

Embodiments of the invention are further described hereinafter with reference to the accompanying drawings, in which:
Figure 1 shows a robotic vehicle according to an embodiment of the present inventions;
Figures 2 to 4 show the robotic vehicle shown in Figure 1, viewed from different angles;
Figure 5 shows the robotic vehicle shown in Figures 1 to 4, in the absence of wheels;
Figure 6 shows the robotic vehicle shown in Figure 1 to 4, with the wheels mounted in a different position to change the ride height of the robotic vehicle;
Figure 7 shows a wheel of the robotic vehicle shown in Figures 1 to 4 and Figure 6;
Figure 8 shows a cross-section through a ball bearing detent mechanism of the robotic vehicle;
Figure 9 shows the robotic vehicle shown in Figures 1 to 4, in the absence of the sensor turret;
Figure 10 shows a sensor turret of the robotic vehicle shown in Figures 1 to 4 and Figure 6;
Figure 11 shows a base surface of the sensor turret shown in Figure 10;
Figure 12 shows the robotic vehicle shown in Figures 1 to 4, in a further operational configuration;
Figure 13 shows an underside of the robotic vehicle shown in Figures 1 to 4, showing a harness attached to the robotic vehicle;
Figure 14 shows a robotic vehicle with a viewing port in the front chassis portion;
Figure 15 shows a part of the front chassis portion with the shroud removed; and
Figure 16 shows a sensor cleaning mechanism mounted on the sensor turret of the robotic vehicle of Figure 14.

### DETAILED DESCRIPTION

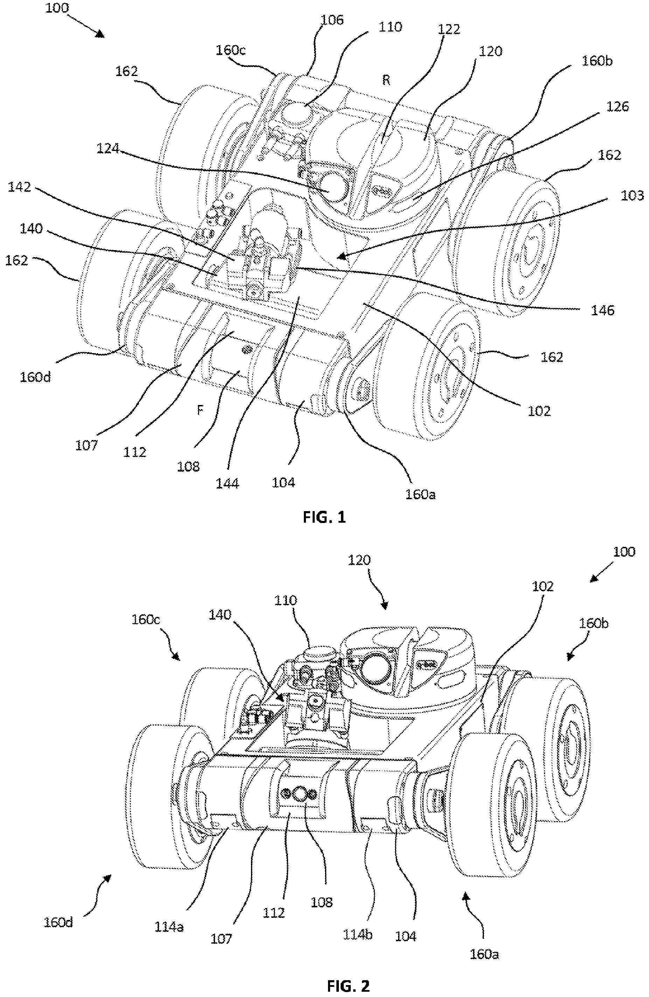

Figure 1 shows a robotic vehicle according to an embodiment of the present inventions. The robotic vehicle 100 comprises a chassis 102 having a front F and a rear R. The front F and the rear R define a longitudinal direction along which the robotic vehicle 100 is configured to move. The chassis 102 supports a sensor turret 120 and a spray gun assembly 140 thereon. The chassis 102 comprises a front chassis portion 104 and a rear chassis portion 106. The rear chassis portion 106 is rotatable relative to the front chassis portion 104. In this example, the rear chassis portion 106 is freely rotatable relative to the front chassis portion 104. In this example, the rear chassis portion 106 extends from the rear R of the chassis 102 to the front chassis portion 104. Thus, the front chassis portion 104 is directly rotatably connected to the rear chassis portion 106. The front chassis portion 104 is connected to the rear chassis portion 106 at a connection point (not shown) therebetween.

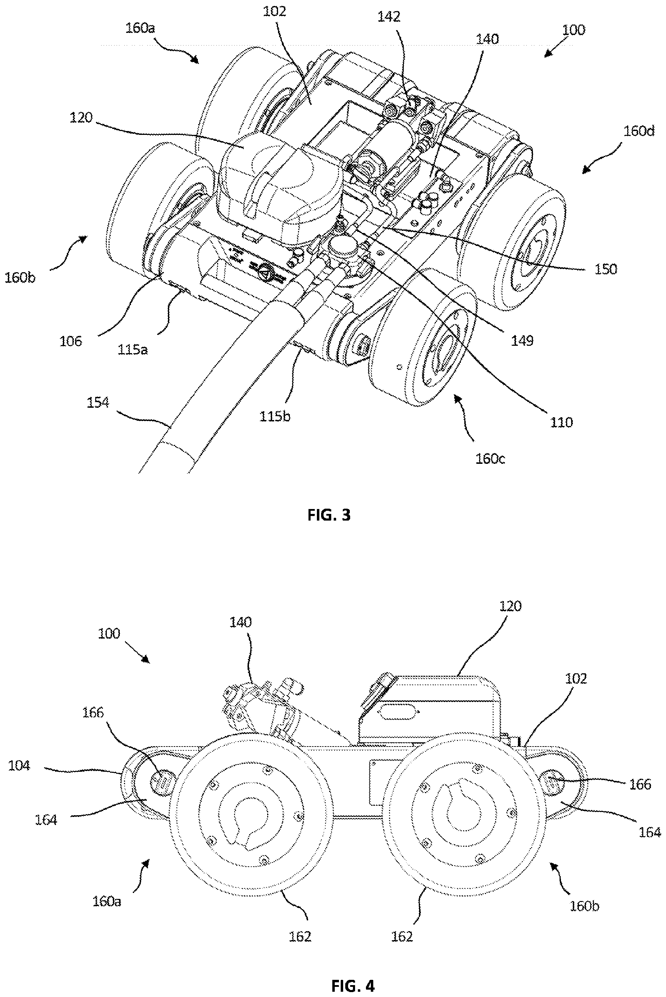

Four wheel assemblies 160a, 160b, 160c, 160d are connected to the chassis 102. In particular, two wheel assemblies 160a, 160d are connected to the front chassis portion 104 and two further wheel assemblies 160b, 160c are connected to the rear chassis portion 106. Each wheel assembly 160a, 160b, 160c, 160d is connected to the chassis 102 away from the front F or the rear R of the chassis 102, for example at a side of the chassis 102 by a release mechanism (not shown in Figure 1). A first part of the release mechanism is removable from a second part of the release mechanism. In this example, the first part of the release mechanism is provided on the chassis 102 and the second part of the release mechanism is provided on each respective wheel assembly 160a, 160b, 160c, 160d. The chassis 102 further comprises a front sensor portion 107 extending frontwardly from the rear chassis portion 106 and beyond the connection point between the front chassis portion 104 and the rear chassis portion 106. The front sensor portion 107 comprises a front sensor (not shown in Figure 1) mounted for motorised movement. In this example, the front sensor is mounted in a housing in the form of a rotatable sensor drum 108 and is for rotational movement. The chassis 102 further supports a hose support member in the form of a hose connection turret 110 rotatably mounted to the chassis 102. The hose connection turret 110 will be described more fully with reference to Figure 3 hereinafter.

The chassis 102 houses, in this example, an energy source (not shown) for the robotic vehicle 100, for example in the form of a battery. Alternatively, power may be provided to the robotic vehicle 100 from an external power source.

The chassis 102 is typically formed to provide a rugged support frame of the robotic vehicle 102. In examples, the chassis 102 may be formed from plastics material, metal or a combination thereof. The chassis 102 may be of substantially openwork construction. Alternatively, the chassis 102 may be of a enclosed-form construction.

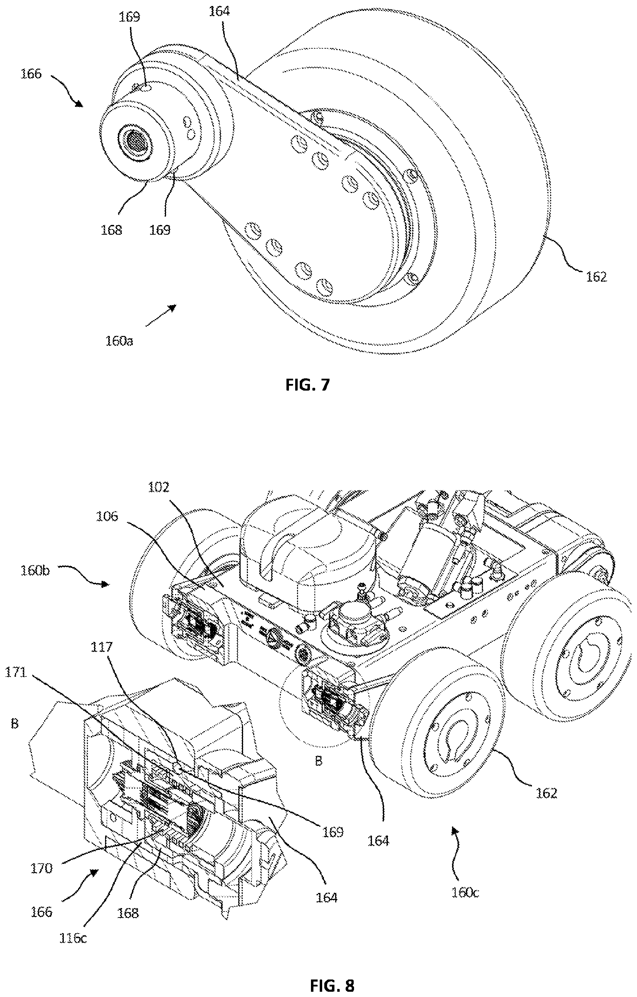

Each wheel assembly 160a, 160b, 160c, 160d comprises a wheel 162 having an axis of rotation of the wheel 162 offset from a mounting point between the wheel assembly 160a, 160b, 160c, 160d and the chassis 102 and from an axis of movement of the wheel assembly 160a, 160b, 160c, 160d during removal from the chassis 102. The wheels 162 are each driven wheels. In some examples, the whole wheel assembly 160a, 160b, 160c, 160d is simply referred to as the wheel. The wheel assembly will be described more fully with reference to Figure 7 hereinafter.

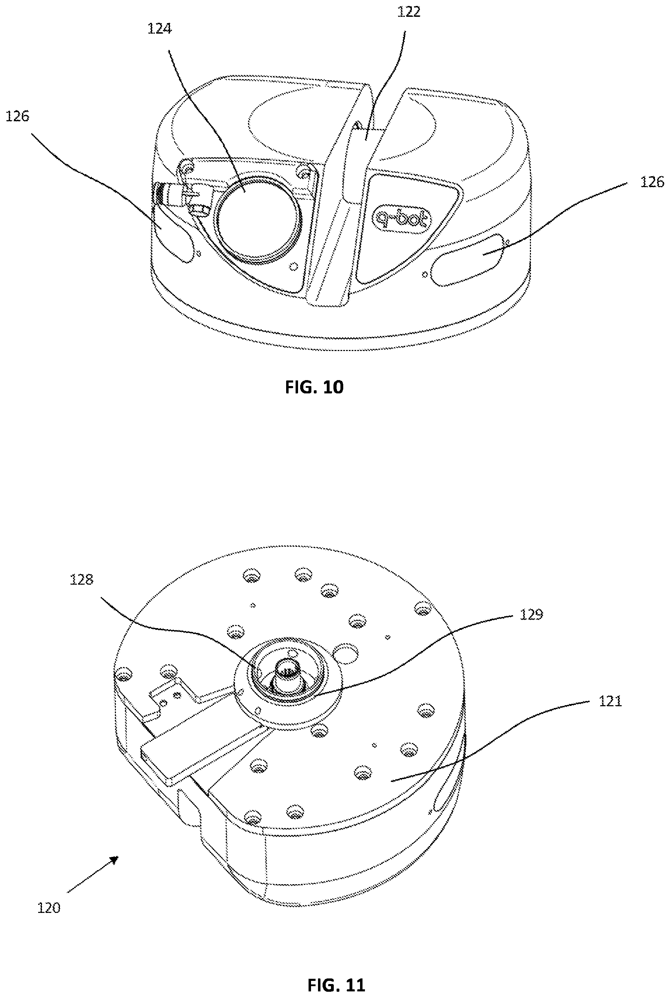

The sensor turret 120 is arranged to extend above an upper surface of the chassis 102 and comprises one or more sensors responsive to an environment of the robotic vehicle 100. The sensor turret 120 is rotatably secured to the rear chassis portion 106 of the chassis 102 rearwardly of the spray gun assembly 140. The sensor turret 120 is configured to rotate about an axis of rotation substantially transverse to the longitudinal direction and to the axis of rotation of the wheels 162. In other words, the axis of rotation of the sensor turret 120 is substantially normal to a ground surface of the robotic vehicle 100, when the vehicle is on a ground surface (not shown). Thus, the sensors of the sensor turret 120 can be rotated as necessary to capture an environment of the robotic vehicle 100 in a plurality of directions. In this example, the sensor turret 120 comprises a range finder sensor in the form of a planar scanning laser range finder 122, a camera 124, and one or more lights 126 to illuminate a field of view of the camera 124. The planar scanning laser range finder 122 in this example is a vertical scanning laser range finger 122, having vertical angular extent of over 180 degrees, for example 220 degrees. The sensor turret 120 will be described more fully with reference to Figure 10 hereinafter.

The spray gun assembly 140 is mounted to the rear chassis portion 106 of the chassis 102, frontwardly of the sensor turret 120. The spray gun assembly 140 is mounted within an opening 103 defined within the rear chassis portion 106 whereby to substantially limit an upper extent of the spray gun assembly 140 outwardly from the chassis 102. The spray gun assembly 140 comprises a spray gun 142 connected to the chassis 102 via a support plate 144. A frontward end of the support plate 144 is rotatably connected to the chassis 102 at an upper end of lateral sides of the opening 103 for powered rotation of the spray gun 142 about a horizontal rotation axis substantially parallel to a ground surface of the robotic vehicle 100, in use. Thus, when the spray gun 142 is rotated back whereby to spray in an upwards pattern, a rear end of the spray gun 142 is lowered within the opening 103 in the chassis 102. The spray gun 142 is mounted to the support plate 144 via a turntable 146 rotatably mounted to the support plate about an axis of rotation substantially normal to the support plate 144 for powered rotation of the spray gun 142 relative to the support plate 144. Thus, the spray gun 142 can be rotated in a powered fashion, for example in a motorised fashion, to spray a material onto a range of positions on a surface in a vicinity of the vehicle 100. The spray gun assembly 140 will be described in more detail with reference to Figure 3 hereinafter.

The rotatable sensor drum 108 is shown in a covered position in Figure 1, where the sensors provided on the sensor drum 108 are covered by a cover portion 112 of the front sensor portion 107 of the chassis 102. The front sensor portion 107 will be explained in more detail with reference to Figure 11 hereinafter.

The chassis 102 also houses a controller (not shown) configured to control an operation of the robotic vehicle 100. In this example, the controller is configured to be in data communication with a control unit of an operator of the robotic vehicle 100. For example, the controller may be in wired or wireless communication with the control unit of the operator. In examples, the controller may be configured to control an operation of the vehicle autonomously. Alternatively, the controller may be configured to receive instructions from an operator via the control unit of the operator to control operation of the robotic vehicle 100 via the controller. The controller controls an operation of the spray gun assembly 140, as well as movement and data capture from the sensor turret 120 and from the front sensor portion 107. The controller further controls a movement of the robotic vehicle 100 over a ground surface by movement of the wheels 162.

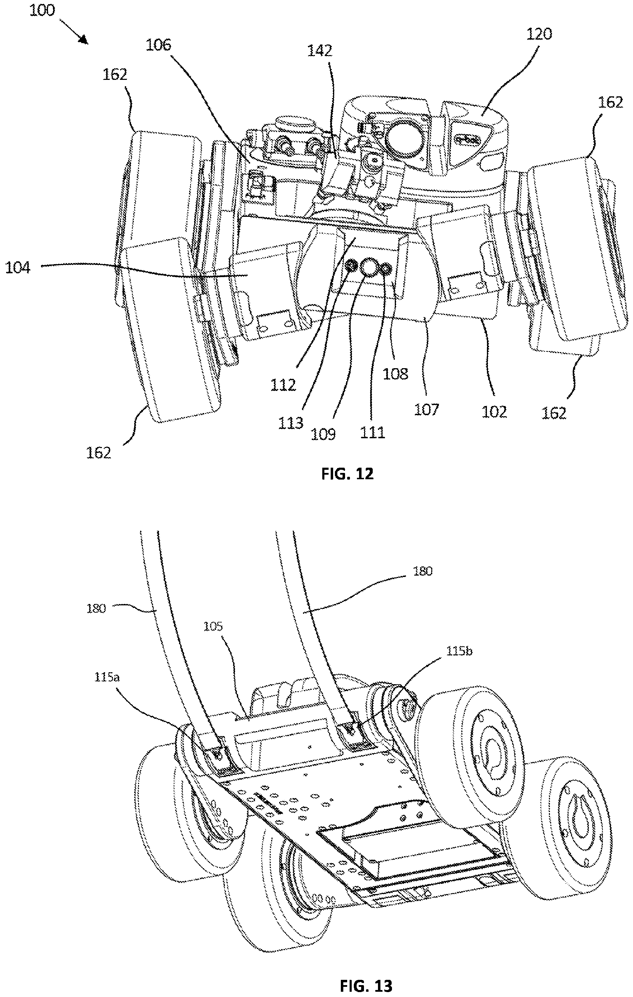

Figures 2 to 4 show the robotic vehicle shown in Figure 1, viewed from different angles. In addition to the features described with reference to Figure 1 hereinbefore, Figure 2 further shows two attachment points in the form of front magnetic connector portions 114a, 114b. Each of the front magnetic connector portions 114a, 114b is provided on the front chassis portion 104 and is configured to be engaged by a further magnetic connector (not shown) as part of a harness for pulling the robotic vehicle 100 from a confined space. Thus, a harness can be easily attached to the robotic vehicle 100 without requiring further tools or complex manipulation of attachment means (such as threaded fasteners). The operation of the magnetic connector portions for removal of the robotic vehicle 100 from a confined space will be described in more detail with reference to Figure 12 hereinafter. However, viewed from one aspect, the provision of an attachment point 114a, 114b on a chassis 102 of the robotic vehicle 100 is considered to be novel and useful.

In addition to the features described with reference to Figures 1 and 2 hereinbefore, Figure 3 shows the robotic vehicle 100 viewed from a rear perspective view. In particular, Figure 3 shows two further attachment points in the form of two rear magnetic connector portions 115a, 115b. Each of the rear magnetic connector portions 115a, 115b is provided on the rear chassis portion 106 and is configured to be engaged by a further magnetic connector as described hereinbefore in relation to the front magnetic connector portions 114a, 114b shown in Figure 2. Figure 3 also shows further details of the spray gun assembly 140, including details of the connection and routing of a supply hose 154 configured to supply spray material to the spray gun 142. The supply hose 154 is connected to the spray gun 142 via the hose connection turret 110. As described hereinbefore, the hose connection turret 110 is rotatably mounted to the chassis 102. In particular, the hose connection turret 110 is configured to be freely rotatable about an axis substantially normal to a ground surface supporting the robotic vehicle in use. A separate linking hose connection in the form of a first linking hose 149 and a second linking hose 150 connect the hose connection turret 110 to the spray gun 142 to provide spray material from the supply hose 154 to the spray gun 142 via the hose connection turret 110 and the first and second linking hoses 149, 150. In examples, the supply hose 154 may be stiff and difficult to manoeuvre. The provision of the hose connection turret 110, free to rotate, allows the supply hose 154 to be routed out of the way by rotation of the hose connection turret 110 and allows the robotic vehicle 100 to reverse close to a boundary wall of the enclosed space. This allows the robotic vehicle 100 to be used effectively in enclosed spaces having very limited room for manoeuvre, without requiring external intervention. It will be understood that in this example, the supply hose 154 provides a conduit to the robotic vehicle 100 for both a first component and a second component to combine to form the spray material to be sprayed by the spray gun 142. In other examples, the supply hose 154 may provide a conduit for only a single component to be sprayed as the spray material by the spray gun 142, in which case one of the first and second linking hoses 149, 150 may not be required.

In this example, the spray gun 142 is configured to spray insulating material, whereby to insulate a surface of the enclosed space. The enclosed space may be an underfloor cavity. The surface may be an underside of a floor. The insulating material may be thermally insulating material. The thermally insulating material may a foam material configured to set after spraying onto the surface. The thermally insulating material may be polyurethane foam.

In addition to the features described with reference to Figures 1 to 3 hereinbefore, Figure 4 shows a side-on view of the robotic vehicle 100, showing the wheel assemblies 160a, 160b mounted in position on the chassis 102. As described previously, the front left wheel assembly 160a is mounted at a left side of the front chassis portion 104. The rear left wheel assembly 160b is mounted at a left-rear portion of the rear chassis portion 106. The wheel 162 of each wheel assembly 160a, 160b is mounted to the chassis 102 via a spacing member 164 having a proximal end connected to the wheel 162 and a distal end, opposite the proximal end, and releasably secured to the chassis 102. Furthermore, the distal end of the spacing member 164 comprises the second part of a release mechanism 166 operable by an operator to release the wheel assembly 160a, 160b from the chassis 102. In this way, the chassis 102 of the robotic vehicle 100 can be removed from the enclosed space separately from the wheel assemblies 160a, 106b. The wheels assemblies 160a, 160b are mounted at an angle of approximately 20 degrees downwardly relative to a ground surface. It will be appreciated that by altering a mounting angle of the wheel assembly 160a, 160b at the release mechanism 166 at the distal end of the spacing member 164, a ride height of the robotic vehicle 100 can be changed due to a change in the vertical offset of the wheel 162 from the chassis 102. This can be useful when the robotic vehicle is operating on rough terrain and needs a greater ground clearance, or when wheels of a different size are mounted at the proximal end of the spacing member, and the ground clearance is to be maintained.

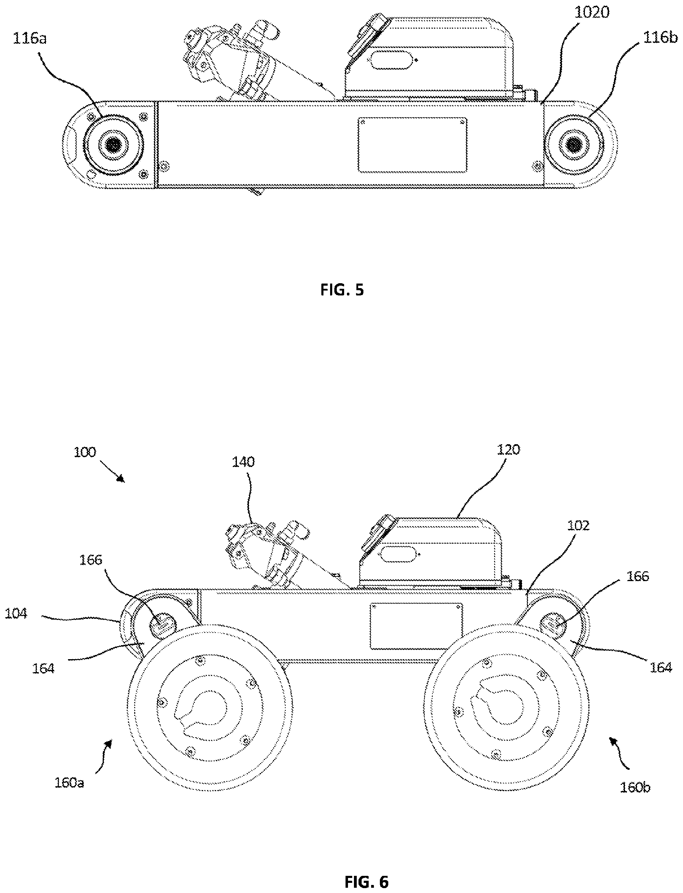

Figure 5 shows the robotic vehicle shown in Figures 1 to 4, in the absence of the wheel assemblies. As can be seen in Figure 5, in the absence of the wheel assemblies 160a, 160b, 160c, 160d, the chassis 102 comprises a plurality of mounting points provided by mounting holes 116a, 116b, 116c, 116d defined therein. The mounting holes 116a, 116b, 116c, 116d each provide the first part of the release mechanism and are arranged to receive a connecting protrusion (not shown in Figure 5) of the corresponding wheel assembly 160a, 160b, 160c, 160d. It will be understood that the mounting holes 116c, 116d are not visible in Figure 5 as they are hidden by the chassis 102.

Figure 6 shows the robotic vehicle shown in Figure 1 to 4, with the wheels mounted in a different position to change a ride height of the robotic vehicle. As can be seen, the spacing member 164 extends downwardly from the chassis 102 and is mounted at an angle of approximately 70 degrees relative to a ground surface, resulting in a change of a ground clearance height of an underside of the chassis 102 away from a flat ground surface. Further, the spacing member 164 is arranged such that an axis of rotation of each of the wheels 162 is inwardly of the mounting point in the longitudinal direction. One of a plurality of discrete ground clearance heights can be selected by rotation of the spacing member 164 by one of a plurality of discrete angles relative to the ground surface.

Figure 7 shows a wheel assembly of the robotic vehicle shown in Figures 1 to 4 and Figure 6. The wheel assembly 160a is substantially similar to any of the other wheel assemblies 160b, 160c, 160d of the robotic vehicle 100. The wheel 162 comprises a propulsion unit therein, in the form of an electric motor (not shown) and a gearbox (not shown). The release mechanism 166 comprises a connecting protrusion 168 and a plurality of resilient connectors in the form of ball bearings 169. When the release mechanism 166 is operated by the operator, the ball bearings 169 retract radially inwards into the connecting protrusion 168 of the wheel assembly 160a. Thus, the connecting protrusion 168 can be inserted into or removed from the respective mounting hole 116a shown in Figure 6 for attachment or removal of the wheel assembly 160a relative to the chassis 102 of the robotic vehicle 100. The release mechanism 166 in this example is known as a ball detent mechanism. The skilled person will understand that other retractable members than ball bearings 169 may be used, having different shapes.

Figure 8 shows a cross-section through a ball detent mechanism of the robotic vehicle. The cross-section illustrates the release mechanism 166 used to secure the wheel assembly 160c to the chassis 102, and in particular to the rear chassis portion 106. As will be seen in Figure 8, the ball bearings 169 are arranged to be biased, by a resilient member in the form of a spring 170 and a wedge 171, within a plurality of shaped cavities 117 defined within an internal surface of the mounting hole 116c. Although not shown, it will be understood that the plurality of shaped cavities 117 are distributed circumferentially around the mounting hole 116c. On operation of the release mechanism 166, by pushing with a finger or thumb of a hand of the operator, the spring 170 is compressed and the wedge 171 is moved axially inwards, allowing the ball bearings 169 to be released from the shaped cavities 117, whereby to allow removal of the connecting protrusion 168 of the wheel assembly 160c from the mounting hole 116c. Alternatively, an angle of the spacing member 164 can be changed by rotation of each circumferentially fixed ball bearings 169 to a different one of the plurality of shaped cavities 117. This results in a change of the ground clearance of the robotic vehicle 100. In examples, the ground clearance can be increased where the robotic vehicle 100 is to be operated on rough terrain. In other examples, the ground clearance can be lowered where the robotic vehicle 100 is to be operated on flat terrain. In a yet further example, the angle can be changed whereby to increase the vertical distance between the mounting hole 116c and a rotational axis of the wheel 162 where the diameter of the wheel is to be decreased. Although Figure 8 shows a cross section through a single ball detect mechanism for a single wheel assembly 160c, it will be understood that each of the wheel assemblies 160a, 160b, 160c, 160d may be arranged in a substantially similar way.

In some examples, the release mechanism 166 further comprises one or more locating aids, such as a keyway to aid correct alignment during insertion of the connecting protrusion 168 of the wheel assembly 160a, 160b, 160c, 160d within the mounting hole 116c.

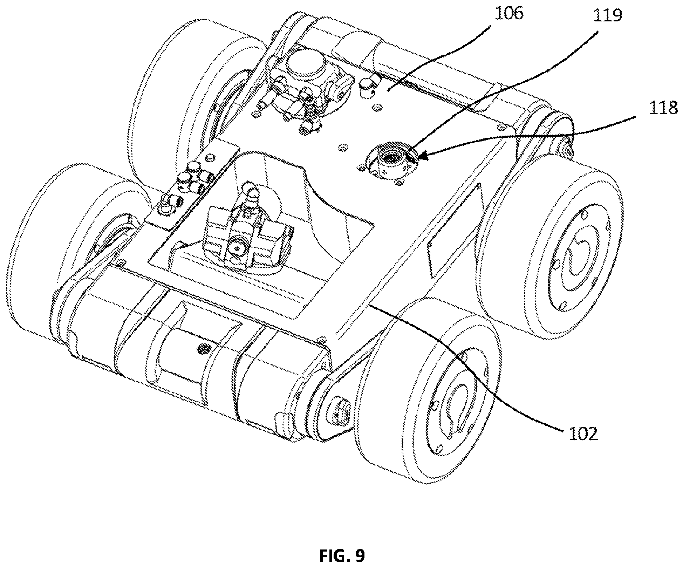

Figure 9 shows the robotic vehicle shown in Figures 1 to 4, in the absence of the sensor turret. The chassis 102 is provided with a turret mounting protrusion 119 extending axially from a base of a turret mounting hole 118. In this example, the turret mounting hole 118 is defined within the rear chassis portion 106 of the chassis 102. An external surface of the turret mounting protrusion 119 has defined therein a plurality of shaped cavities 119a for receiving a corresponding plurality of ball bearings (not shown in Figure 9) of the sensor turret. It will be understood that removal of the sensor turret 120 from the chassis 102 is done in a substantially similar way to removal of the wheel assembly 160a, 160b, 160c, 160d from the chassis 102. A turret release mechanism (not shown) is operable by the operator to remove the ball bearings of the sensor turret 120 out of the shaped cavities 119a, whereby to allow the sensor turret 120 to be removed from the turret mounting hole 118. Thus, the sensor turret 120 can be removed from the confined space separately from the rest of the robotic vehicle 100.

Figure 10 shows a sensor turret of the robotic vehicle shown in Figures 1 to 4 and Figure 6. As described hereinbefore, the sensor turret 120 comprises a range finder sensor in the form of a planer scanning laser range finder 122, a camera 124, and one or more lights 126 to illuminate a field of view of the camera 124. The camera 124 is arranged to capture a surface of the enclosed space, sprayed by spray material from the spray gun 142. The sensor turret 120 can be rotated on the chassis 102 of the robotic vehicle 100 to allow the camera 124 to capture images of the surface to be sprayed before, during or after a spraying operation of the spray gun 142. The lights 126 are arranged to illuminate the surface of the enclosed space during capture of images by the camera 124. In this example, the lights 126 are angularly offset from a direction of the camera 124, whereby to avoid glare from the spray material in the images of the surface of the enclosed space, captured by the camera 124. In some examples, the lights 126 are covered by a diffuse filter, whereby to provide a diffuse illumination of the environment of the robotic vehicle 100. As can be seen in Figure 11, a base surface 121 of the sensor turret 120 has defined therein a turret connecting opening 128 for receiving the turret mounting protrusion 119 of the chassis 102. An internal surface of the turret connecting opening 128 comprises a plurality of radially inwardly extending connectors 129, each biased radially inward from the turret connecting opening 128, whereby to engage with the shaped cavities 119a within the turret mounting protrusion 119 when the turret 120 is mounted to the chassis 102 of the robotic vehicle 100.

Figure 12 shows the robotic vehicle shown in Figures 1 to 4, in a further operational configuration. The sensor drum 108 of the front sensor portion 107 is rotated into a sensing configuration to reveal at least one front sensor in the form of a front camera 109, a temperature sensor 111 and a distance sensor 113. The front camera 109, the temperature sensor 111 and the distance sensor 113 were previously covered by the cover portion 112 of the front sensor portion 107. The sensor drum 108 can be rotated to a range of different positions, whereby to allow the front camera 109 to capture an image of the spray gun 142 for diagnostic purposes, as well as an image of the terrain in front of the robotic vehicle 100. The cover portion 112 in this example is arranged directly against the sensor drum 108, whereby to scrape any spray material off an exposed part of the sensor drum 108 during rotation of the sensor drum 108. The sensor drum 108 may be covered by a cover layer, such as transparent plastic of glass, whereby to ensure substantially all the spray material can be removed from the sensor drum 108 by the cover portion 112. As has been described previously, the front chassis portion 104 is freely rotatable relative to the rear chassis portion 106. The sensor portion 107 is arranged to be fixedly connected to the rear chassis portion 106 such that the sensor portion 107 rotates with the rear chassis portion 106. Thus, the sensor portion 107 does not rotate with the front chassis portion 104. This ensures that an orientation of an image from the camera 109 remains substantially registered with any sensor data from the sensor turret 120, even when the wheels 162 connected to the front chassis portion 104 traverse uneven terrain and the front chassis portion 104 is rotated relative to the rear chassis portion 106. In order to combine data from one or more sensors of the sensor portion 107 with data from one or more sensors of the sensor turret 120, no data registration is required to account for the mutual rotation between the front chassis portion 104 and the rear chassis portion 106. Of course, other data registration may be required to account for a rotational position of either or both of the sensor drum 108 and the sensor turret 120 relative to the rear chassis portion 106.

Figure 13 shows an underside of the robotic vehicle shown in Figures 1 to 4, showing a harness attached to the robotic vehicle. As shown, a harness 180 can be attached to the one or more attachment points in the form of the rear magnetic connector portions 115a, 115b. In this example, the harness 180 is attached to both of the rear magnetic connector portions 115a, 115b. Thus, when the robotic vehicle 100 is located in an enclosed space, the harness 180 can be easily attached by lowering one or more connector ends of the harness near to any of the magnetic connector portions 114a, 114b, 115a, 115b. The connector end will automatically engage with the magnetic connector portions 114a, 114b, 115a, 115b whereby to provide a strong connection between the harness 180 and the robotic vehicle 100. It will be appreciated that the wheel assemblies 160a, 160b, 160c, 160d and/or the sensor turret 120 may be removed from the robotic vehicle 100 prior to extraction of the robotic vehicle 100 from the enclosed space using the harness 180. In this example, the magnetic connector portions 114a, 114b, 115a, 115b are Fidlock magnetic connectors. Figure 13 also shows a handle 105 which can instead or additionally be used to aid insertion or removal of the robotic vehicle 100 from the confined space, such as an underfloor void accessed through a restricted opening. In this example, the handle 105 is at the rear of the chassis 102, but could be positioned elsewhere, and may take the form of a finger-groove.

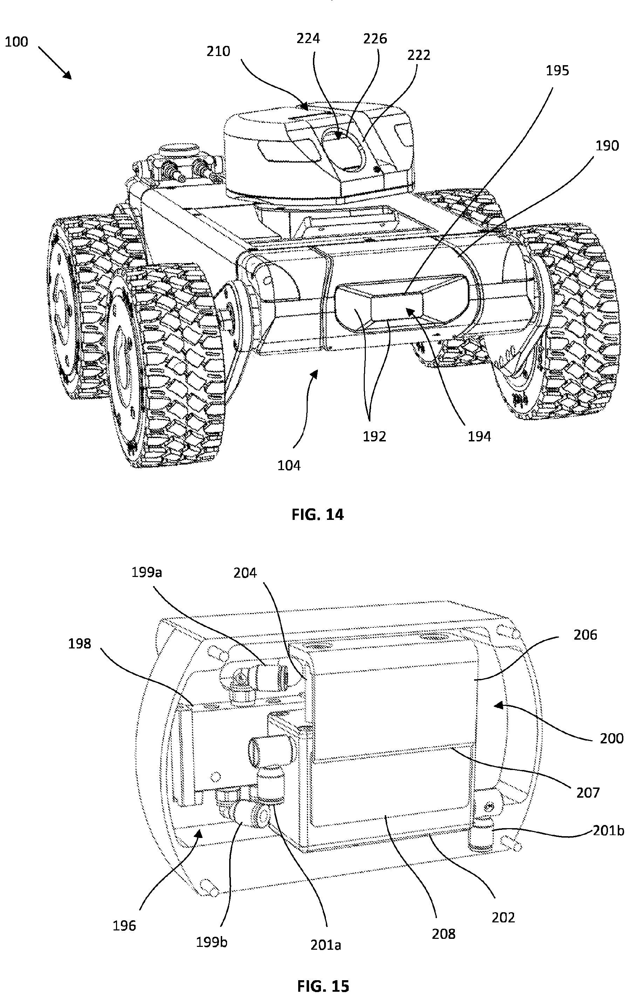

Figure 14 shows a robotic vehicle 100 with a viewing port 194 in the front chassis portion 104. When operating in an underfloor void, some of the sprayed insulating material may not adhere to the surface of the underfloor void. Instead, some of the material may fall back towards the robotic vehicle 100 and adhere to the robotic vehicle 100, covering portions of the robotic vehicle 100. A directional sensor (not shown) may be used to provide directional sensor data from in front of the vehicle 100, for example to aid navigation of the robotic vehicle 100. If sprayed material falls onto the directional sensor, this can obscure the directional sensor and reduce the effectiveness of the vehicle 100. As insulating material is sprayed, a spray mist is often formed in the air and permeates through the air for a period of time. Once spraying has ceased, this spray mist may remain in the air for some time, and as the robotic vehicle navigates through the underfloor void, the spray mist can adhere to the robotic vehicle and potentially obscure the directional sensor.

To address these issues, the front chassis portion 104 may have a shroud 190 and a recessed viewing port 194. This allows the directional sensor to be located behind the viewing port 194 and housed within the internal space of the shroud 190. A viewing window 208 may be provided across the viewing port 194 to prevent ingress of material through the viewing port 194. The viewing window 208 may be formed of a transparent material. The viewing window 208 may be considered to define a viewing plane and a normal axis extending away from the viewing window 208, generally in the forward direction of the robotic vehicle 100. As shown in Figure 15, the viewing window 208 is spaced from a shutter 206 in the direction of the normal axis.

A plurality of angled surfaces 192 defining the viewing port 194 is shown in Figure 14. The angled surfaces 192 are arranged such that the field of view of the directional sensor mounted behind the viewing port 194 is not restricted. The angled surfaces 192 are recessed by a depth sufficient to reduce the risk of large pieces of insulating material adhering to the front chassis portion 104 and obscuring the directional sensor. Recessing the viewing port 194 by a depth of 25mm is found to be effective at preventing insulating material from obscuring the directional sensor. The directional sensor may be any sensor capable of recording data in a directional manner indicative of the sensed environment. The directional sensor may be a laser rangefinder or a camera, for example.

Figure 15 shows a part of the front chassis portion 104 with the shroud 190 removed. The internal space 196 behind the shroud 190 accommodates a switched solenoid 198 and sensor apparatus 200 in the form of a sensor cleaning mechanism 200. The sensor cleaning mechanism 200 comprises a sensor housing 202, an actuator 204, a shutter 206 and the viewing window 208. The switched solenoid 198 is configured to connect a compressed air line (not shown) to the sensor cleaning mechanism 200 via air inlets 201a, 201b and air outlets 199a, 199b. The air outlets 199a, 199b are connected to air inlets 201a, 201b by sections of tubing (not shown). The directional sensor is housed within the sensor cleaning mechanism 200 and senses the environment through the viewing window 208. The directional sensor may have a sensing axis indicative of the direction in which data related to the environment is sensed. This axis may be the normal axis described above. The sensing axis may intersect with the viewing plane. The switched solenoid 198 allows the actuator 204 to be driven pneumatically and, in turn, allows the shutter 206 to be driven between an open configuration (as shown in Figure 15) and a closed configuration. In the closed configuration, the shutter 206 may substantially cover the viewing window 208, so as to prevent insulating material from adhering to the viewing window 208. In the open configuration, the shutter 206 is positioned clear of the viewing window 208. This allows the directional sensor to detect the environment without being obstructed by the shutter 206. The shutter 206 may be located in the space between the viewing window 208 and the viewing port 194. The shutter 206 may be generally parallel with the viewing window 208 and the plane of the viewing port 194. A small gap between the viewing window 208 and shutter 206 may be incorporated so as to reduce the risk of the shutter 206 causing damage to the viewing window 208, for example by scratching. The sensor cleaning mechanism 200 may comprise a resiliently deformable member (not shown), such as a spring, to bias the shutter in the open or closed configuration. For example, the shutter 206 may be biased to the closed configuration, and kept open by the actuator 208. In the event of the actuator 208 failing, for example by a loss of air pressure if the shutter 206 is pneumatically driven, the shutter 206 would be forced closed by the resiliently deformable member and would cover the viewing window 208, protecting the sensor. Alternatively, the shutter 206 may be biased to the open configuration, and closed by the actuator 208. In the event of the actuator 208 failing, the shutter 206 would be forced open by the resiliently deformable member.

Operating the sensor cleaning mechanism 200 helps clear the viewing window 208 of finer particulate debris or spray mist, and any insulating material that has not properly adhered to the surface of the underfloor void and has adhered to the viewing window 208. As the robotic vehicle 100 navigates to a location in the underfloor void, the shutter 206 may remain in the open configuration to enable the directional sensor to sense the environment and to facilitate navigation of the robotic vehicle 100. Upon reaching a location where insulating material is to be applied to the surface of the underfloor void, the shutter 206 may be driven closed to substantially cover the viewing window 208, and insulating material may be sprayed onto the surface of the underfloor void. Once the desired layer of insulating material has been sprayed, insulating material that has adhered to the shutter 206 may be removed by driving the shutter 206 into the open configuration. As the shutter 206 is driven open, the relative motion between the shutter 206 and an edge 195 of the viewing port 194 acts to remove the adhered insulating material. Edge 195 may be considered a cutting edge configured to remove spray material adhered to the shutter 206. As the shutter 206 is driven open, material will be sheared off the shutter 206 and pushed up the angled surface 192 above the edge 195 of the viewing port 194. A coating may be applied to the shutter 206 to improve the removal of insulating material adhered to the shutter 206.

An anti-adhesive coating may be applied to the shutter 206 to enhance the removal of insulating material from the shutter 206. The anti-adhesive coating may comprise polytetrafluoroethylene (PTFE). Once in the open configuration, the directional sensor will be able to detect the environment through the viewing window 208 and the robotic vehicle 100 can be operated to move to the next location for spraying. When the shutter 206 is open, it is likely some spray mist will adhere to the viewing window 208. This will be exacerbated by driving the vehicle 100 through the void between periods of spraying, as spray mist will remain in the air. The shutter 206 may be driven between open and closed positions to clear any spray mist from the viewing window 208. The shutter 206 may be opened and closed in quick succession to enable rapid cleaning of the viewing window 208. Driving the actuator 204 with compressed air enables this action to be performed considerably faster than using an electric motor and is one particularly advantageous effect of incorporating a pneumatic system. The shutter 206 may be made from a hardened material to withstand forces due to being driven past the edge 195 of the viewing port 194 used to remove adhered insulating material when being driven into the open configuration. The shutter 206 may be formed of metal, for example stainless steel. The forceful movement of the shutter 206 under the action of the compressed air is particularly effective in removing debris from the shutter 206 and/or the viewing window 208.

In some case, it may be desirable to spray insulating material with the shutter 206 in the open configuration. In these cases, insulating material that has adhered to the viewing window 208 may be removed by driving the shutter 206 into the closed configuration. If needed, this can be performed repeatedly and in quick succession, effectively chipping away at the insulating material that has adhered to the viewing window 208. This may be enhanced by incorporating a bevelled edge 207 on the shutter 206. The bevelled edge 207 may be formed as an angled or tapered edge on the shutter 206. The shutter 206 may have a cross-sectional profile having an edge that tapers in the direction of progression of the shutter 206.

In addition to using the shutter 206 to clean the viewing window 208, a cleaning member (not shown) may be provided as part of the sensor cleaning mechanism 200, for example attached to the shutter 206. The cleaning member may be configured to contact the viewing window 208. The cleaning member may be configured to remove spray mist or fine particulate debris that cannot be removed by the shutter 206 alone. As the cleaning member is not required to remove large pieces of insulating material, the cleaning member may be made of one or more softer, elastomeric materials. The cleaning element may comprise one or more rubberised or foam elements, for example in the form of a squeegee or blade. The cleaning member may be made of a single piece of material or formed as a brush or a series of bristles having a plurality of elements that contact the surface of the viewing window 208. The cleaning member may comprise non-contact cleaning means to remove debris from the viewing window 208. The non-contact cleaning means may utilise compressed air to remove debris or spray mist from the viewing window 208.

Once spraying has ceased, it is preferable to delay opening the shutter 206 by a period of time. One reason to allow for a delay, is to allow the insulating material time to set and harden, making it easier to cut away any material adhered to the surface of the shutter 206. A further reason to allow for a delay is to allow the spray mist, formed during the spraying of insulating material, to permeate more before driving the vehicle 100 through the spray mist. By allowing the spray mist to permeate more, the spray mist will be less dense and fewer particles of spray mist will contact the viewing window 208. A further reason to delay opening the shutter 206 is to allow any insulating material that has inadequately set on the surface of the underfloor void to fall onto the ground before driving the vehicle 100 through the void. Such a delay may be implemented by the controller of the robotic vehicle, or by the operator operating the robotic vehicle. The delay between ceasing spraying insulating material and opening the shutter 206 may be approximately 10 seconds.

The source of compressed air used to drive the shutter 206 may be that used in the spray gun assembly 140. However, it will be apparent that the sensor cleaning mechanism 200 does not require the spray gun assembly 140 to be present, and that an independent compressed air line may be used to drive the sensor cleaning mechanism 200. It will also be apparent that the sensor cleaning mechanism may be a separate module that can be attached to any robotic vehicle that may comprise one or more directional sensors. While the sensor cleaning mechanism 200 is shown preferably mounted within the front chassis portion 104 of a robotic vehicle, it will be apparent that this is not essential to the operation of the sensor cleaning mechanism 200 and that the sensor cleaning mechanism may be mounted to a robotic vehicle 100 at other locations.

It will also be apparent that the sensor cleaning mechanism 200 need not be mounted to a robotic vehicle 100 and may alternatively be attached to a lance or other spraying apparatus suitable for deployment in confined or restricted spaces such as underfloor cavities. It will also be apparent that the sensor cleaning mechanism 200 need not be part of a device that sprays material. In one example, a first device may perform the spraying of insulating material while a second device may sense the environment and comprises the sensor cleaning mechanism 200.

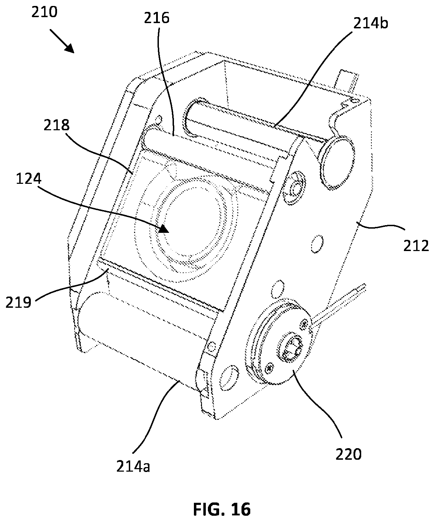

Figure 16 shows a further sensor cleaning mechanism 210 mounted on the sensor turret of the robotic vehicle of Figure 14. The sensor cleaning mechanism 210 comprises a housing 212, a plurality of rollers 214a, 214b secured to the housing 212 and configured to connect to a film reel (not shown), a motor 220 configured to drive at least one of the rollers 214a, 214b, and a protective screen 218 secured to the housing 212. The first 214a and second 214b rollers are spaced either side of a camera 124 mounted within the housing 212. In use, a layer of the film reel may be extended between the first 214a and second 214b rollers, providing a moveable protective layer in front of the camera 124. This prevents insulating material and debris, such as spray mist, from adhering to the camera 124 and rendering the robotic vehicle 100 inoperable. By driving the motor 220, a dirtied layer of film reel in front of the camera 124 may be replaced with a clean layer of film, thereby keeping the field of view of the camera clear of any obstructions that would hinder the performance of the robotic vehicle 100.

A protective screen 218 may also be located between the first 214a and second 214b rollers and between the camera 124 and the film reel to prevent debris from being drawn across the lens of the camera 124. As the film held by the first roller 214a is transferred to the second roller 214b, the thickness of the first 214a and second 214b rollers will change. As the layer of film between the first 214a and second 214b rollers forms a plane in front of the camera 124, it is desirable to keep this plane of film perpendicular to the viewing axis of the camera 124 to minimise any distortive effects the film may introduce. To reduce the risk of damaging the film reel when drawing the film across the camera 124, the housing 212 may incorporate a rounded surface 219 located between the first roller 214a and the protective screen 218. It will be apparent that the protective screen 218 may incorporate a curved surface to avoid damaging the film reel. A further roller 216 is shown located between the protective screen 218 and the second roller 214b. By passing the film reel over the further roller 216, the angle of the film layer in front of the camera is not influenced by the change in thickness of the second roller 214b. This enables the second roller 214b to be located behind the further roller 216, and reduce the overall space occupied by the cleaning mechanism 210. As shown in Figure 14, a face plate 222 having a viewing port 224 may be used to secure the cleaning mechanism 210 to the sensor turret 120. The viewing port 224 may include an angled or bevelled surface 226 configured to clear debris from the film layer, as the motor 220 drives the film layer across the camera 124. While a camera 124 is described within sensor cleaning mechanism 210, it would be apparent other directional sensors may be used alternatively or in combination.

In summary, there is provided sensor apparatus for protecting a sensor device in an environment where material has been sprayed. The sensor apparatus comprising a housing having a directional sensor responsive to an environment of the sensor and a viewing window having defined thereon a viewing plane and a normal axis extending away from the viewing window; and at least one actuator configured to drive a shutter in a plane of motion. The plane of motion is parallel to and spaced from the viewing plane in the direction of the normal axis. The shutter is configured to remove spray material adhered to the viewing window when driven in the plane of motion. There is also provided a robotic vehicle (100) for operating in a confined space, such as under a floor of a building, for example a house. The robotic vehicle (100) comprises a chassis (102) having a front (F) and a rear (R) defining a longitudinal direction extending between the front (F) and the rear (R), the robotic vehicle (100) for movement in the longitudinal direction. The robotic vehicle (100) further comprises a plurality of first parts (116a, 116b, 116c, 116d) for a respective plurality of release mechanisms (166), the first parts (116a, 116b, 116c, 116d) each connected to the chassis (102) and each release mechanism (166) for securing a respective wheel (160a, 160b, 160c, 160d) to the chassis (102). Each first part (116a, 116b, 116c, 116d) provides a mounting point for the respective wheel (160a, 160b, 160c, 160d) away from the front (F) or the rear (R) of the chassis (102). Each release mechanism (160) is operable by an operator to release the respective wheel (160a, 160b, 160c, 160d) from the chassis (102) for separate removal of the wheels (160a, 160b, 160c, 160d) and the robotic vehicle (100) from the confined space.

Throughout the description and claims of this specification, the words "comprise" and "contain" and variations of them mean "including but not limited to", and they are not intended to (and do not) exclude other components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments, but by the appended claims.

## Claims

1. A robotic vehicle (100) for operating in a confined space, such as under a floor of a building, for example a house, the robotic vehicle comprising:
a chassis (102) having a front and a rear defining a longitudinal direction extending between the front and the rear, the robotic vehicle for movement in the longitudinal direction;
a plurality of wheels (162), wherein each wheel (162) comprises a propulsion unit contained therein,
a plurality of first parts (116) of a respective plurality of release mechanisms (166), the first parts each connected to the chassis for securing a respective wheel to the chassis,
wherein each release mechanism is operable by an operator to release the respective wheel and propulsion unit from the chassis for separate removal of the wheels and the chassis from the confined space,
wherein each wheel is mounted to the chassis via a spacing member (164) having a proximal end connected to the wheel and a distal end, opposite the proximal end, and releasably secured to the chassis (102) by the release mechanism such that each wheel is mounted away from the front or rear of the chassis, and
**characterized in that** each of the plurality of release mechanisms is selectively operable such that each spacing member is rotatable between a plurality of discrete angular positions relative to the chassis to provide one of a plurality of angular positions of the offset between the axis of rotation of the respective wheel (162) and the chassis in order to selectively adjust a ride height of the robotic vehicle .

2. A robotic vehicle as claimed in claim 1, further comprising a camera (124, 109) arranged to capture images of the surroundings of the robotic vehicle (100).

3. A robotic vehicle as claimed in claim 1 or claim 2, further comprising a controller to control operation of the robotic vehicle (100).

4. A robotic vehicle as claimed in any preceding claim, wherein each of the plurality of release mechanisms (166) is operable one-handed by an operator to release the respective wheel (162) from the chassis (102).

5. A robotic vehicle as claimed in any preceding claim, wherein each of the plurality of release mechanisms (166) is operable tool-less by an operator to release the respective wheel (162) from the chassis (102).

6. A robotic vehicle as claimed in claim 5, wherein each of the plurality of release mechanisms (166) is a quick-release mechanism.

7. A robotic vehicle as claimed in claim 6, wherein each of the plurality of release mechanisms (166) is a ball detent mechanism.

8. A robotic vehicle as claimed in any preceding claim, wherein each distal end of each spacing member (164) comprises a corresponding second part of one of the plurality of release mechanisms (166) to be released from the first part of the respective release mechanism on operation of the release mechanism.

9. A robotic vehicle as claimed in claim 8, wherein the second part of each of the plurality of release mechanisms (166) is configured to be actuated upon one-handed operation by the operator to selectively release the respective wheel (162) from the chassis.

10. A robotic vehicle as claimed in claim 8 or claim 9, wherein the wheels (162) are driven wheels to drive the robotic vehicle (100) in the longitudinal direction.

11. A robotic vehicle as claimed in any preceding claim, wherein an axis of rotation of each of the wheels (162) is offset from an axis of movement of the respective release mechanism (166) during removal of each wheel from the chassis.

12. A robotic vehicle as claimed in any preceding claim, further comprising a sensor turret (120) comprising one or more sensors (122, 124) responsive to an environment of the robotic vehicle (100), secured to the chassis (102) and rotatable about an axis substantially transverse to the longitudinal direction and to an axis of rotation of the wheels (162),
wherein the sensor turret is secured to the chassis by a turret release mechanism operable by an operator, whereby to be removable from the chassis prior to insertion (or removal) of the robotic vehicle to (or from) a confined space.

13. A robotic vehicle (100) as claimed in any preceding claim, wherein the robotic vehicle (100) is a driven vehicle.

14. A method of removing a robotic vehicle (100) from a confined space, such as under a floor of a building, for example a house, the robotic vehicle comprising:
a chassis (102) having a front and a rear defining a longitudinal direction extending between the front and the rear, the robotic vehicle for movement in the longitudinal direction;
a plurality of wheels (162), wherein each wheel (162) comprises a propulsion unit contained therein;
a plurality of first parts (116) of a respective plurality of release mechanisms (166), the first parts each connected to the chassis for securing a respective wheel to the chassis;
wherein each release mechanism is operable by an operator to release the respective wheel and propulsion unit from the chassis for separate removal of the wheels and the chassis from the confined space, and
each wheel being mounted to the chassis via a spacing member (164) having a proximal end connected to the wheel and a distal end, opposite the proximal end, and releasably secured to the chassis (102) by the release mechanism such that each wheel is mounted away from the front or rear of the chassis and wherein each of the plurality of release mechanisms (166) is selectively operable such that each spacing member is rotatable between a plurality of discrete angular positions relative to the chassis to provide one of a plurality of angular positions of the offset between the axis of rotation of the respective wheel (162) and the chassis in order to selectively adjust a ride height of the robotic vehicle,
the method comprising:
providing the robotic vehicle in the confined space;
operating at least one of the plurality of release mechanisms to adjust an angular position of at least one of the spacing members to selectively adjust a ride height of the robotic vehicle;
operating each release mechanism, whereby to remove each of the wheels and propulsion unit from the chassis; and
removing the chassis of the robotic vehicle from the confined space separately from the driven wheels of the robotic vehicle.

## Patentansprüche

1. Roboterfahrzeug (100) zum Betreiben in einem begrenzten Raum, wie etwa unter einem Boden eines Gebäudes, zum Beispiel eines Hauses, wobei das Roboterfahrzeug Folgendes umfasst:
ein Fahrgestell (102), das eine Vorderseite und eine Hinterseite aufweist, die eine Längsrichtung definieren, die sich zwischen der Vorderseite und der Hinterseite erstreckt, wobei das Roboterfahrzeug zur Bewegung in der Längsrichtung vorgesehen ist;
eine Vielzahl von Rädern (162), wobei jedes Rad (162) eine darin enthaltene Vortriebseinheit umfasst,
eine Vielzahl von ersten Teilen (116) einer jeweiligen Vielzahl von Lösemechanismen (166), wobei die ersten Teile jeweils mit dem Fahrgestell verbunden sind, um ein jeweiliges Rad an dem Fahrgestell zu sichern,
wobei jeder Lösemechanismus durch einen Bediener betreibbar ist, um zum separaten Entfernen der Räder und des Fahrgestells aus dem begrenzten Raum das jeweilige Rad und die Vortriebseinheit von dem Fahrgestell zu lösen,
wobei jedes Rad an dem Fahrgestell über ein Abstandselement (164) montiert ist, das ein proximales Ende, das mit dem Rad verbunden ist, und ein distales Ende gegenüber dem proximalen Ende aufweist, und durch den Lösemechanismus lösbar an dem Fahrgestell (102) gesichert ist, sodass jedes Rad von der Vorderseite oder Hinterseite des Fahrgestells entfernt montiert ist, und
**dadurch gekennzeichnet, dass** jeder der Vielzahl von Lösemechanismen selektiv betreibbar ist, sodass jedes Abstandselement zwischen einer Vielzahl von diskreten Winkelpositionen relativ zu dem Fahrgestell drehbar ist, um eine von einer Vielzahl von Winkelpositionen des Versatzes zwischen der Drehachse des jeweiligen Rads (162) und dem Fahrgestell bereitzustellen, um selektiv eine Bodenfreiheit des Roboterfahrzeugs einzustellen.

2. Roboterfahrzeug nach Anspruch 1, ferner umfassend eine Kamera (124, 109), die angeordnet ist, um Bilder des Umfelds des Roboterfahrzeugs (100) zu erfassen.

3. Roboterfahrzeug nach Anspruch 1 oder Anspruch 2, ferner umfassend eine Steuervorrichtung, um den Betrieb des Roboterfahrzeugs (100) zu steuern.

4. Roboterfahrzeug nach einem vorhergehenden Anspruch, wobei jeder der Vielzahl von Lösemechanismen (166) durch einen Bediener einhändig betreibbar ist, um das jeweilige Rad (162) von dem Fahrgestell (102) zu lösen.

5. Roboterfahrzeug nach einem vorhergehenden Anspruch, wobei jeder der Vielzahl von Lösemechanismen (166) durch einen Bediener werkzeuglos betreibbar ist, um das jeweilige Rad (162) von dem Fahrgestell (102) zu lösen.

6. Roboterfahrzeug nach Anspruch 5, wobei jeder der Vielzahl von Lösemechanismen (166) ein Schnelllösemechanismus ist.

7. Roboterfahrzeug nach Anspruch 6, wobei jeder der Vielzahl von Lösemechanismen (166) ein Kugelarretierungsmechanismus ist.

8. Roboterfahrzeug nach einem vorhergehenden Anspruch, wobei jedes distale Ende jedes Abstandselements (164) einen entsprechenden zweiten Teil eines der Vielzahl von Lösemechanismen (166) umfasst, der bei Betrieb des Lösemechanismus von dem ersten Teil des jeweiligen Lösemechanismus zu lösen ist.

9. Roboterfahrzeug nach Anspruch 8, wobei der zweite Teil jedes der Vielzahl von Lösemechanismen (166) dazu konfiguriert ist, bei einhändigem Betrieb durch den Bediener betätigt zu werden, um das jeweilige Rad (162) selektiv von dem Fahrgestell zu lösen.

10. Roboterfahrzeug nach Anspruch 8 oder Anspruch 9, wobei die Räder (162) angetriebene Räder sind, um das Roboterfahrzeug (100) in der Längsrichtung anzutreiben.

11. Roboterfahrzeug nach einem vorhergehenden Anspruch, wobei während eines Entfernens jedes Rads von dem Fahrgestell eine Drehachse jedes der Räder (162) von einer Bewegungsachse des jeweiligen Lösemechanismus (166) versetzt ist.

12. Roboterfahrzeug nach einem vorhergehenden Anspruch, ferner umfassend einen Sensorturm (120), der einen oder mehrere Sensoren (122, 124) umfasst, die auf eine Umgebung des Roboterfahrzeugs (100) reagieren, an dem Fahrgestell (102) gesichert sind und um eine Achse im Wesentlichen quer zu der Längsrichtung und zu einer Drehachse der Räder (162) drehbar sind,
wobei der Sensorturm durch einen Turmlösemechanismus, der durch einen Bediener betreibbar ist, an dem Fahrgestell gesichert ist, wodurch er vor dem Einsetzen (oder Entfernen) des Roboterfahrzeugs in einen (oder aus einem) begrenzten Raum von dem Fahrgestell entfernbar ist.

13. Roboterfahrzeug (100) nach einem vorhergehenden Anspruch, wobei das Roboterfahrzeug (100) ein angetriebenes Fahrzeug ist.

14. Verfahren zum Entfernen eines Roboterfahrzeugs (100) aus einem begrenzten Raum, wie etwa unter einem Boden eines Gebäudes, zum Beispiel eines Hauses, wobei das Roboterfahrzeug Folgendes umfasst:
ein Fahrgestell (102), das eine Vorderseite und eine Hinterseite aufweist, die eine Längsrichtung definieren, die sich zwischen der Vorderseite und der Hinterseite erstreckt, wobei das Roboterfahrzeug zur Bewegung in der Längsrichtung vorgesehen ist;
eine Vielzahl von Rädern (162), wobei jedes Rad (162) eine darin enthaltene Vortriebseinheit umfasst;
eine Vielzahl von ersten Teilen (116) einer jeweiligen Vielzahl von Lösemechanismen (166), wobei die ersten Teile jeweils mit dem Fahrgestell verbunden sind, um ein jeweiliges Rad an dem Fahrgestell zu sichern;
wobei jeder Lösemechanismus durch einen Bediener betreibbar ist, um zum separaten Entfernen der Räder und des Fahrgestells aus dem begrenzten Raum das jeweilige Rad und die Vortriebseinheit von dem Fahrgestell zu lösen, und
wobei jedes Rad an dem Fahrgestell über ein Abstandselement (164) montiert ist, das ein proximales Ende, das mit dem Rad verbunden ist, und ein distales Ende gegenüber dem proximalen Ende aufweist, und durch den Lösemechanismus lösbar an dem Fahrgestell (102) gesichert ist, sodass jedes Rad von der Vorderseite oder Hinterseite des Fahrgestells entfernt montiert ist, und wobei jeder der Vielzahl von Lösemechanismen (166) selektiv betreibbar ist, sodass jedes Abstandselement zwischen einer Vielzahl von diskreten Winkelpositionen relativ zu dem Fahrgestell drehbar ist, um eine von einer Vielzahl von Winkelpositionen des Versatzes zwischen der Drehachse des jeweiligen Rads (162) und dem Fahrgestell bereitzustellen, um selektiv eine Bodenfreiheit des Roboterfahrzeugs einzustellen,
wobei das Verfahren Folgendes umfasst:
Bereitstellen des Roboterfahrzeugs in dem begrenzten Raum;
Betreiben mindestens eines der Vielzahl von Lösemechanismen, um eine Winkelposition mindestens eines der Abstandselemente einzustellen, um selektiv eine Bodenfreiheit des Roboterfahrzeugs einzustellen;
Betreiben jedes Lösemechanismus, um dadurch jedes der Räder und die Vortriebseinheit von dem Fahrgestell zu entfernen; und
Entfernen des Fahrgestells des Roboterfahrzeugs aus dem begrenzten Raum separat von den angetriebenen Rädern des Roboterfahrzeugs.

## Revendications

1. Véhicule robotisé (100) destiné à fonctionner dans un espace confiné, tel que sous un plancher d'un bâtiment, par exemple une maison, le véhicule robotisé comprenant :
un châssis (102) possédant un avant et un arrière définissant une direction longitudinale s'étendant entre l'avant et l'arrière, le véhicule robotisé se déplaçant dans la direction longitudinale ;
une pluralité de roues (162), chaque roue (162) comprenant une unité de propulsion y étant contenue,
une pluralité de premières parties (116) d'une pluralité respective de mécanismes de libération (166), les premières parties étant chacune connectées au châssis pour fixer une roue respective au châssis,
chaque mécanisme de libération pouvant être actionné par un opérateur pour libérer la roue et l'unité de propulsion respectives du châssis pour retirer séparément les roues et le châssis de l'espace confiné,
chaque roue étant montée sur le châssis par l'intermédiaire d'un élément d'espacement (164) comportant une extrémité proximale reliée à la roue et une extrémité distale, opposée à l'extrémité proximale, fixée de manière libérable au châssis (102) par le mécanisme de libération de sorte que chaque roue soit montée à distance de l'avant ou de l'arrière du châssis, ledit véhicule robotisé étant **caractérisé en ce que** chaque mécanisme de libération de la pluralité de mécanismes de libération peut être actionné de manière sélective de sorte que chaque élément d'espacement puisse tourner entre une pluralité de positions angulaires discrètes par rapport au châssis pour fournir l'une d'une pluralité de positions angulaires du décalage entre l'axe de rotation de la roue (162) respective et le châssis afin de régler de manière sélective une hauteur de roulement du véhicule robotisé.

2. Véhicule robotisé selon la revendication 1, comprenant en outre une caméra (124, 109) conçue pour capturer des images de l'environnement du véhicule robotisé (100).

3. Véhicule robotisé selon la revendication 1 ou la revendication 2, comprenant en outre un dispositif de commande pour commander le fonctionnement du véhicule robotisé (100).

4. Véhicule robotisé selon l'une quelconque des revendications précédentes, chaque mécanisme de libération de la pluralité de mécanismes de libération (166) pouvant être actionné d'une seule main par un opérateur pour libérer la roue (162) respective du châssis (102).

5. Véhicule robotisé selon l'une quelconque des revendications précédentes, chaque mécanisme de libération de la pluralité de mécanismes de libération (166) pouvant être actionné sans outil par un opérateur pour libérer la roue (162) respective du châssis (102).

6. Véhicule robotisé selon la revendication 5, chaque mécanisme de libération de la pluralité de mécanismes de libération (166) étant un mécanisme de libération rapide.

7. Véhicule robotisé selon la revendication 6, chaque mécanisme de libération de la pluralité de mécanismes de libération (166) étant un mécanisme de détente à bille.

8. Véhicule robotisé selon l'une quelconque des revendications précédentes, chaque extrémité distale de chaque élément d'espacement (164) comprenant une seconde partie correspondante de l'un de la pluralité de mécanismes de libération (166) à libérer de la première partie du mécanisme de libération respectif lors du fonctionnement du mécanisme de libération.

9. Véhicule robotisé selon la revendication 8, ladite seconde partie de chaque mécanisme de libération de la pluralité de mécanismes de libération (166) étant configurée pour être actionnée lors d'une opération d'une seule main par l'opérateur pour libérer de manière sélective la roue (162) respective du châssis.

10. Véhicule robotisé selon la revendication 8 ou la revendication 9, lesdites roues (162) étant des roues motrices pour entraîner le véhicule robotisé (100) dans la direction longitudinale.

11. Véhicule robotisé selon l'une quelconque des revendications précédentes, un axe de rotation de chacune des roues (162) étant décalé par rapport à un axe de déplacement du mécanisme de libération (166) respectif pendant le retrait de chaque roue du châssis.

12. Véhicule robotisé selon l'une quelconque des revendications précédentes, comprenant en outre une tourelle de capteurs (120) comprenant un ou plusieurs capteurs (122, 124) sensibles à un environnement du véhicule robotisé (100), fixés au châssis (102) et pouvant tourner autour d'un axe sensiblement transversal à la direction longitudinale et à un axe de rotation des roues (162), ladite tourelle de capteurs étant fixée au châssis par un mécanisme de libération de tourelle actionnable par un opérateur, de manière à pouvoir être retirée du châssis avant l'insertion (ou le retrait) du véhicule robotisé vers (ou depuis) un espace confiné.

13. Véhicule robotisé (100) selon l'une quelconque des revendications précédentes, ledit véhicule robotisé (100) étant un véhicule entraîné.

14. Procédé de retrait d'un véhicule robotisé (100) d'un espace confiné, tel que sous un plancher d'un bâtiment, par exemple une maison, le véhicule robotisé comprenant :
un châssis (102) possédant un avant et un arrière définissant une direction longitudinale s'étendant entre l'avant et l'arrière, le véhicule robotisé se déplaçant dans la direction longitudinale ;
une pluralité de roues (162), chaque roue (162) comprenant une unité de propulsion y étant contenue ;
une pluralité de premières parties (116) d'une pluralité respective de mécanismes de libération (166), les premières parties étant chacune connectées au châssis pour fixer une roue respective au châssis ;
chaque mécanisme de libération pouvant être actionné par un opérateur pour libérer la roue et l'unité de propulsion respectives du châssis pour retirer séparément les roues et le châssis de l'espace confiné, et
chaque roue étant montée sur le châssis par l'intermédiaire d'un élément d'espacement (164) comportant une extrémité proximale reliée à la roue et une extrémité distale, opposée à l'extrémité proximale, fixée de manière libérable au châssis (102) par le mécanisme de libération de sorte que chaque roue soit montée à distance de l'avant ou de l'arrière du châssis, et chaque mécanisme de libération de la pluralité de mécanismes de libération (166) pouvant être actionné de manière sélective de sorte que chaque élément d'espacement puisse tourner entre une pluralité de positions angulaires discrètes par rapport au châssis pour fournir l'une d'une pluralité de positions angulaires du décalage entre l'axe de rotation de la roue (162) respective et le châssis afin de régler de manière sélective une hauteur de roulement du véhicule robotisé,
le procédé comprenant :
la mise à disposition du véhicule robotisé dans l'espace confiné ;
l'actionnement d'au moins l'un de la pluralité de mécanismes de libération pour régler une position angulaire d'au moins l'un des éléments d'espacement pour régler de manière sélective une hauteur de roulement du véhicule robotisé ;
l'actionnement de chaque mécanisme de libération, afin de retirer chacune des roues et des unités de propulsion du châssis ; et
le retrait du châssis du véhicule robotisé de l'espace confiné séparément des roues entraînées du véhicule robotisé.
